## Europäisches Patentamt

## European Patent Office

## Office européen des brevets

(19)

(11) Veröffentlichungsnummer: **0 054 018**
**B2**

(12) **NEUE EUROPÄISCHE PATENTSCHRIFT**

(45) Veröffentlichungstag der neuen Patentschrift:
**09.03.88**

(51) Int. Cl.⁴: **F 23 K 3/02,** B 65 G 53/22, B 65 D 88/72

(21) Anmeldenummer: **80900548.1**

(22) Anmeldetag: **19.03.80**

(86) Internationale Anmeldenummer:
**PCT/DE 80/00033**

(87) Internationale Veröffentlichungsnummer:
**WO 81/02773 (01.10.81 Gazette 81/23)**

(54) **KOHLENSTAUBTANK MIT EINRICHTUNG ZUM DOSIERTEN AUSTRAGEN, INSBESONDERE KLEINER KOHLENSTAUBMENGEN.**

(43) Veröffentlichungstag der Anmeldung:
**23.06.82 Patentblatt 82/25**

(45) Bekanntmachung des Hinweises auf die Patenterteilung:
**17.10.84 Patentblatt 84/42**

(45) Bekanntmachung des Hinweises auf die Entscheidung über den Einspruch:
**09.03.88 Patentblatt 88/10**

(84) Benannte Vertragsstaaten:
**DE FR GB**

(56) Entgegenhaltungen:
**DE - A - 2 728 386**
**DE - A - 2 839 417**
**DE - C - 967 759**
**FR - A - 2 413 298**
**GB - A - 887 309**

(73) Patentinhaber: **Schoppe, Fritz, Dr.-Ing.,**
**Max-Rüttgers-Strasse 24, D-8026 Ebenhausen/Isartal (DE)**

(72) Erfinder: **Schoppe, Fritz, Dr.-Ing.,**
**Max-Rüttgers-Strasse 24, D-8026 Ebenhausen/Isartal (DE)**

(74) Vertreter: **Körner, Ekkehard, Dipl.-Ing., Patentanwalt Maximilianstrasse 58, D-8000 München 22 (DE)**

EP 0 054 018 B2

ACTORUM AG

# Beschreibung

Die Erfindung betrifft einen Kohlenstaubtank mit Einrichtung zum dosierten Austragen insbesondere kleiner Kohlenstaubmengen in einem gleichmässigen Strom mit den im Oberbegriff des Patentanspruchs aufgeführten Merkmalen. Eine derartige Anlage ist vom Patentinhaber in den Jahren 1976 bis 1978 konzipiert und von der Firma AZO-Maschinenfabrik Adolf Zimmermann GmbH in D-6960 Osterburken gebaut und bei der Gewerkschaft Sophia-Jacoba in D-5142 Hückelhoven Anfang des Jahres 1979 installiert worden.

Bei der bekannten Anlage bestanden die Einrichtungen zum dosierten Austragen von Kohlenstaub aus einem mit dem Kohlenstaubtank verbundenen, aufrecht stehenden Behälter, in welchem der Kohlenstaub in fluidisiertem Zustand gehalten wurde und an den im unteren Bereich aussen an zwei gegenüberliegenden Seiten Zellenräder angebaut waren, die durch einen Spalt in der Behälterwand teilweise in den Behälter hineinragten, um von dort Kohlenstaub aufzunehmen, aus dem Behälter herauszutransportieren und dort an einen Blasluftstrom abzugeben. Im Dauerbetrieb erwies sich diese Konstruktion ungeeignet, sie erfordert einen beachtlichen Dichtungsaufwand an den Zellenrädern und deren Wellen und macht die Wartung schwierig.

Aus der FR-A 2 413 298 ist ein Silo für Schüttgut mit einer daneben stehenden pneumatischen Fördereinrichtung bekannt, die das aus dem Silo mit pneumatischer Hilfe entnommene pulvrige oder granulierte Schüttgut nach oben transportiert. Einzelheiten der pneumatisch unterstützten siloseitigen Entnahmevorrichtung sind nicht beschrieben. Die Fördereinrichtung besteht im wesentlichen aus einem aufrecht stehenden Kessel, der von oben befüllbar ist, von einem in Bodennähe endenden Rohr durchzogen ist, an dessen unteren offenen Ende ein Trichter angesetzt ist, in den ein Blasrohr mündet. In den Trichter eingeblasene Luft saugt das umgebende Schüttgut an und transportiert dieses durch das Rohr nach oben. Zwar ist durch Einstellung des Luftdrucks eine Beeinflussung der geförderten Schüttgutmenge möglich, doch hängt diese auch von der Korngrösse und von der Fliessfähigkeit ab und ist daher nicht eindeutig reproduzierbar.

Aus der DE-A 2 728 386 ist eine Vorrichtung zur dosierten Übergabe von Schüttgut in einen pneumatischen Förderstrom bekannt, die eine um eine senkrechte Achse umlaufende Scheibe aufweist, die teilweise innerhalb einer Schüttgutsäule in einem Vorratsbehälter, zum anderen Teil ausserhalb der Schüttgutsäule angeordnet ist und bei ihrem Umlauf das Schüttgut in Durchgangslöchern aufnimmt und nach Passieren eines Abstreifers in eine pneumatische Förderleitung abgibt. Die Achse ist durch den Boden des Vorratsbehälters geführt, während die beiden Zweige der Förderleitung, die an der Scheibe beginnen bzw. enden, durch die Seitenwand des Behälters geführt sind. Diese Konstruktion bereitet wegen der Dichtungs- und Abriebprobleme an der Achsdurchführung im Betrieb Schwierigkeiten und ist auch bei der Wartung der Abrieb unterworfenen Teile ungünstig, da diese nur schwer zugänglich sind.

Der Erfindung liegt die Aufgabe zugrunde, einen Kohlenstaubtank mit Einrichtung zum dosierten Austragen von Kohlenstaub der eingangs genannten Art so auszugestalten, dass die an Wellendichtungen der Dosier- und Austrageinrichtung zu stellenden Anforderungen verringert werden können und eine Überprüfung und ggf. ein Austausch von Abrieb unterworfenen Teilen der Dosier- und Austrageinrichtung erleichtert sind.

Diese Aufgabe wird durch die kennzeichnenden Merkmale des Anspruchs 1 gelöst. Vorteilhafte Ausgestaltungen der Erfindung sind Gegenstand der abhängigen Ansprüche.

Die Erfindung verwendet somit eine Dosierund Austrageinrichtung, von der einzelne Merkmale an sich bereits bekannt sind. Damit wird eine gleichmässige Dosierung des im Dosierbehälter fluidisierten Kohlenstaubs sichergestellt. Aufgrund der Tatsache, dass die zu wartenden Elemente der Dosier- und Austrageinrichtung ausschliesslich an dem abnehmbaren Deckel des Dosierbehälters befestigt sind, ergibt sich der für die Wartung der Einrichtung wesentliche Vorteil, dass durch einfaches Abnehmen des Deckels diese Elemente, nämlich die Dosierscheibe und die an ihr endenden Rohre der Trägerluftleitung mit ihren Dichtungen frei zugänglich sind. Innerhalb des Dosierbehälters brauchen daher keinerlei Montagearbeiten ausgeführt zu werden. Weiterhin ist bemerkenswert, dass keine Wellendichtungen in den fluidisierten Kohlenstaub im Dosierbehälter eingetaucht sind, da der Antrieb der Dosierscheibe durch den Deckel des Dosierbehälters hindurch erfolgt.

Der Tankboden oder der gesamte Tank sind unter einem Winkel von 8° bis 15°, vorzugsweise unter einem Winkel von 10°, gegen die Horizontale geneigt, um das Abfliessen des Kohlenstaubs zu begünstigen. Weiterhin sind mehrere am Boden in den Tank einmündende Druckluftleitungen vorgesehen, die von einem Luftverteiler in wechselnder Folge mit Druckluft beaufschlagt werden und daher periodisch, stossweise pulsierend Luft in den Tank einblasen und den Kohlenstaub darin in Bewegung bringen, um das Abfliessen weiter zu begünstigen. Eine weitere Unterstützung der Abförderung des Kohlenstaubs kann erreicht werden, wenn längs der tiefsten Stelle der Verbindungsleitung zwischen Kohlenstaubtank und Dosierbehälter ein mit vorzugsweise in Förderrichtung geneigten Luftaustrittsöffnungen versehenes Rohr angeordnet wird, das an den Luftverteiler angeschlossen und von diesem mit Druckluft versorgt wird.

Ähnlich wie in der Heizölbevorratung in geschlossenen Räumen ist es auch bei der Erfindung möglich, Tankbatterien aufzustellen und beispielsweise zwei Kohlenstaubtanks einer einzigen Dosier- und Austrageinrichtung zuzuordnen.

Die Erfindung soll nachfolgend unter Bezugnahme auf ein in den Zeichnungen dargestelltes Ausführungsbeispiel näher erläutert werden. Es zeigt:

Fig. 1 einen Schnitt durch den Kohlenstaubtank und den mit der Dosiereinrichtung versehenen Dosierbehälter in schematischer Darstellung, und

Fig. 2 einen Schnitt durch einen Teil der Dosiereinrichtung in vergrössertem Massstab.

Der den Kohlenstaub zwecks Lagerung enthaltende Tank 1 ist unter einem Winkel von etwa 10° gegen eine Horizontale geneigt und mit einem Tankdom 2 im Bereich der höchsten Stelle des Tanks 1 versehen. Der Innenraum des Tankdorms 2 ist gegen den Innenraum des Tanks 1 durch ein Filter 3 getrennt. Im Tank 1 befindet sich ein luftdurchlässiger Boden 4. Der Raum unterhalb des Bodens 4 ist durch Stege od. dgl. in vier Kammern unterteilt, in welche die Luftleitungen 5 einmünden, die an einen Luftverteiler 6 angeschlossen sind, welcher von der Verbrennungsluftleitung 7 mit Druckluft versorgt wird. Über die Druckluftleitung 8 kann Druckluft in den Innenraum des Tankdoms 2 eingeführt werden, welcher über einen mit einer einstellbaren Drossel 9 versehenen Rohrstutzen mit der Atmosphäre in Verbindung steht.

Der Kohlenstaubtank 1 steht über die mit einem Absperrschieber versehene Leitung 10 mit dem Behälter 11 in Verbindung, welcher die Dosiereinrichtung enthält. Im unteren Bereich des Dosierbehälters 11 befindet sich ebenfalls ein luftdurchlässiger Boden 12. In den Raum unterhalb des Bodens 12 mündet eine Druckluftleitung, die an die Verbrennungsluftleitung 7 angeschlossen ist. An der Wand des Dosierbehälters 11 befinden sich im Abstand voneinander und übereinander die Niveausonden 13, 14, die den Nachschub an Kohlenstaub aus dem Tank 1 in den Dosierbehälter 11 steuern. Durch die in den Dosierbehälter 11 eingeleitete Luftmenge $L_2$ wird die in ihm befindliche Kohlenstaubmenge $K_2$ fluidisiert. Sinkt das Niveau der sich in fluidisiertem Zustand befindlichen Kohlenstaubmenge $K_2$ bis zur unteren Niveausonde 14 ab, so wird über den Luftverteiler 6 eine Luftmenge $L_3''$ über die Luftleitung 8 in den Innenraum des Tankdoms 2 vorzugsweise pulsierend stossartig eingeleitet, wodurch am Filter 3 sitzender Kohlenstaub abgeschüttelt und der Filter gereinigt wird. Anschliessend wird von dem Luftverteiler 6 eine Luftmenge $L_3'$ anteilig und in wechselnder Folge über die Luftleitungen 5 in die Kammern unterhalb des luftdurchlässigen Bodens eingeblasen, wodurch die Kohlenstaubmenge $K_1$ im Kohlenstaubtank in Bewegung gerät und durch die Verbindungsleitung 10 in den Innenraum des Dosierbehälters 11 gefördert wird. Dies geschieht so lange, bis das Kohlenstaubniveau im Dosierbehälter 11 die Niveausonde 13 erreicht hat, wodurch im Luftverteiler 6 die Luftzufuhr zu den Luftleitungen 5 abgeschaltet wird. Zweckmässigerweise erfolgt anschliessend die Einleitung einer weiteren Luftmenge $L_3''$ während einer kurzen Zeitspanne in den Innenraum des Tankdoms 2 zwecks erneuter Reinigung des Filters 3.

Die Mündung 15 der Verbindungsleitung 10 muss nicht unbedingt, wie dargestellt, oberhalb der oberen Niveausonde 13 liegen; es ist auch möglich, diese tiefer anzuordnen, was sich vorteilhaft auf die Bauhöhe auswirkt, weil dadurch der Dosierbehälter 11 gegenüber dem Tank 1 höher zu liegen kommt. Unter solchen Umständen lässt sich sogar erreichen, dass der Dosierbehälter an die Stirnseite eines Tanks angebaut oder in diesen integriert werden kann. Dies ist in der Regel vorteilhafterweise dann möglich, wenn die mittlere Dichte des fluidisierten Kohlenstaubs im Dosierbehälter 11 unter 400 kg/m³ liegt. Unter diesen Bedingungen rutscht der Kohlenstaub auch dann in den Dosierbehälter 11 hinein, wenn die Mündung 15 der Verbindungsleitung 10 mehr oder weniger weit unterhalb des Niveaus der Kohlenstaubsäule im Dosierbehälter 11 liegt.

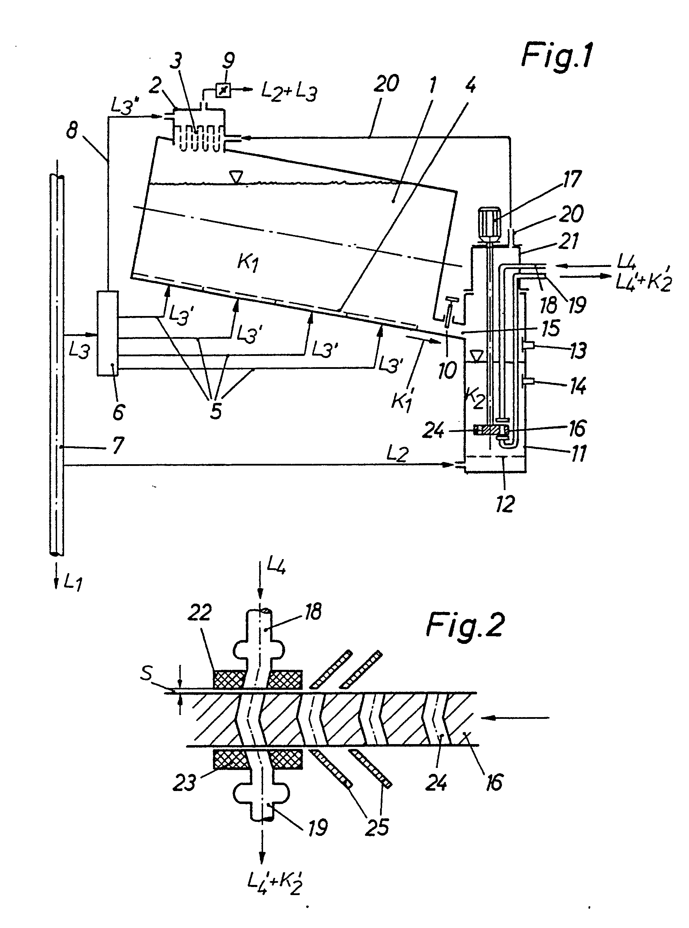

Die Dosierscheibe 16 ist, wie insbesondere aus Fig. 2 hervorgeht, mit Zellen 24 versehen, die in regelmässigen Abständen längs eines Kreises um die Drehachse angeordnet sind. Im einfachsten Falle handelt es sich bei den Zellen um achsparallele Bohrungen in der Scheibe 16; die Zellen 24 können aber auch aus am Umfang der Scheibe 16 befindlichen Ausschnitten bestehen. Die die Trägerluft zuführende Leitung 18 mündet unmittelbar oberhalb der Scheibe 16 in einem Abstand von der Drehachse der Scheibe 16, so dass die Mündung koaxial zu den Zellen 24 liegt. In entsprechender Lage befindet sich die Mündung der die mit Kohlenstaub beladenen Trägerluft abführenden Leitung der Dosierscheibe 16. Vorteilhafterweise sind die Rohrmündungen der Rohre 18, 19 mit sie umgebenden Dichtungen 22, 23 versehen. Diese haben die Aufgabe, die Verwirbelung des Kohlenstaubs in unmittelbarer Nachbarschaft der Zellen 24 durch aus den Spalten S zwischen den Rohrmündungen und der Dosierscheibe 16 austretenden Leckluftmengen geringstmöglich zu halten und damit die Füllung der Zellen 24 in der Dosierscheibe 16 mit Kohlenstaub nicht zu beeinträchtigen. Dies wird weiterhin dadurch gefördert, dass die Zellen in der Dosierscheibe 16 gekrümmt verlaufen, und zwar in Bewegungsrichtung gesehen, rückwärts gekrümmt sind, wie dies insbesondere aus Fig. 2 hervorgeht. Von Vorteil ist weiterhin die Anordnung schräg gestellter Leitbleche 25 in unmittelbarer Nachbarschaft der Mündungen der Rohre 18, 19.

Der Austrag der relativ kleinen Kohlenstaubmengen $K_2'$ pro Zeiteinheit mit Hilfe der Trägerluftmenge $L_4$ erfolgt mittels der Dosiereinrichtung, welche aus einer im unteren Bereich des Behälters 11 angeordneten, sich in einer horizontalen Ebene drehenden Dosierscheibe 16 mit ihrer Antriebswelle und dem Antriebsmotor 17, welcher auf dem Deckel des Dosierbehälters 11 angeordnet ist, sowie den Rohrleitungen 18 und 19 besteht, durch welche einerseits die Trägerluft zugeführt und andererseits der mit Kohlenstaub beladene Luftstrom abgeführt wird. Da zwecks Fluidisierung der Kohlenstaubmenge $K_2$ im Dosierbehälter Druckluft in diesen eingeführt wird, ist es erforderlich, die überschüssige Luftmenge, die gegebenenfalls noch mit geringen Mengen Kohlenstaubs beladen sein kann, über eine Leitung 20 in den Innenraum des Tanks 1 zurückzuführen.

Vorteilhafterweise sitzt die Dosiereinrichtung mit allen ihren Elementen an dem Deckel 21 des Dosierbehälters 11, um diese beispielsweise bei Störungen in einfacher Weise austauschen zu können. Es ist in einem solchen Fall lediglich notwendig, den Deckel 21 vom Behälter 11 zu lösen und diesen nach oben abzuziehen.

Es hat sich als günstig erwiesen, wenn die Höhe der Kohlenstaubsäule im Dosierbehälter 11 etwa 400 bis 800 mm und die durch den luftdurchlässigen Boden 12 hindurchtretende Fluidisierungsluftmenge $L_2$ zwischen 15 und 60 m³/h pro Quadratmeter, vorzugsweise etwa 30 m³/h pro Quadratmeter, Bodenfläche beträgt, entsprechend einem Druckverlust der Luftmenge $L_2$ beim Durchströmen des Bodens 12 von etwa 200 bis 400 WS, je nach dem Widerstand des luftdurchlässigen Bodens 12. Die Luftmenge $L_2$ wird vorzugsweise so eingeregelt, dass sich eine mittlere Dichte des fluidisierten Kohlenstaubs $K_2$ im Dosierbehälter 11 von etwa 200 bis 250 kg/m³ einstellt. Unter derartigen Bedingungen hat der Kohlenstaub besonders günstige Fliesseigenschaften, so dass er sich gut und exakt dosieren lässt.

Die Grösse des luftdurchlässigen Bodens 12 beträgt etwa 0,2 bis 0,6 m² pro 1000 kg/h Kohlenstaubdurchsatz, zweckmässigerweise ca. 0,4 m² pro 1000 kg/h Kohlenstaubdurchsatz, wobei aus Gründen des Randeinflusses für kleinere Durchsätze etwas grössere und für grössere Durchsätze etwas kleinere Flächendimensionen gewählt werden sollten. Unter diesen Bedingungen erhält man besonders günstige Bewegungsverhältnisse des fluidisierten Kohlenstaubs, insbesondere im Bereich der Dosierscheibe 16. Der Dosierbehälter kann jedwede Querschnittsform aufweisen, zweckmässigerweise verwendet man einen runden oder quadratischen Querschnitt. Je nach den in Betracht kommenden Verhältnissen können ein oder mehr Dosiereinrichtungen nebeneinander im Dosierbehälter angeordnet sein.

Die Erfindung lässt sich auf die Lagerung und das dosierte Austragen nicht nur von Kohlenstaub, sondern auch von allen fluidisierbaren feinkörnigen Produkten anwenden, wobei je nach der Materialdichte entsprechend angepasste Dimensionen der mechanischen Teile sowie der Drücke und Mengen vorzusehen sind.

## Patentansprüche

1. Kohlenstaubtank mit Einrichtung zum dosierten Austragen insbesondere kleiner Kohlenstaubmengen in einem gleichmässigen Strom, mit folgenden Merkmalen:

a) dem Kohlenstaubtank (1) ist ein die Dosier- und Austragseinrichtung (16, 17) enthaltender Dosierbehälter (11) zugeordnet, welche beide mittels einer im tiefsten Bereich des Tanks (1) angeordneten Leitung (10) oder Öffnung miteinander verbunden sind;

b) in dem Kohlenstaubtank (1) und in dem Dosierbehälter (11) sind luftdurchlässige Böden (4; 12) angeordnet, von welchen zumindest derjenige im Kohlenstaubtank (1) unter einem Winkel von etwa 8 bis 15°, vorzugsweise etwa 10°, gegenüber einer Horizontalen geneigt ist und sich bis an die Kohlenstaub-Austrittsöffnung des Tanks (1) erstreckt;

c) der unter dem luftdurchlässige Boden (4) im Tank (1) befindliche Raum ist durch Stege od. dgl. in mehrere Kammern unterteilt;

d) in die unter den luftdurchlässigen Böden im Tank (1) und im Dosierbehälter (11) befindlichen Räume münden Druckluftleitungen, von welchen die an die Kammern unter dem Boden (4) im Tank (1) angeschlossenen Druckluftleitungen (5) mit einem die Druckluft periodisch, stossweise pulsierend abgebenden Luftverteiler (6) verbunden sind;

e) der Kohlenstaubtank (1) ist an seiner höchsten Stelle mit einem Tankdom (2) verbunden, dessen Innenraum mittels eines Filters (3) gegen den Innenraum des Tanks (1) abgeteilt ist und in welchem einerseits eine vorzugsweise an den Druckluft periodisch, gegebenenfalls stossweise pulsierend abgebenden Luftverteiler (6) angeschlossene Druckluftleitung (8) einmündet und in dessen Wandung sich eine mit der Atmosphäre in Verbindung stehende, eine vorzugsweise einstellbare Drossel (9) enthaltende Öffnung befindet;

f) der Raum oberhalb der Kohlenstaubsäule $(K_2)$ im Dosierbehälter (11) ist über eine Leitung (20) mit dem Raum unterhalb des Filters (3) verbunden;

g) in dem Dosierbehälter (11) befinden sich zwei die programmgemässe Druckluftabgabe durch den Luftverteiler (6) steuernde Niveausonden (13, 14), dadurch gekennzeichnet, dass die Dosier- und Austragseinrichtung im unteren Bereich des Dosierbehälters (11) aus einer, um eine vertikale Achse drehbaren, von einem Motor (17) gesteuert angetriebenen, mit längs eines Kreises angeordneten Zellen (24) versehenen Dosierscheibe (16) und einer die Trägerdruckluft der Dosierscheibe (16) zuführenden Rohrleitung (18) und einer die mit Kohlenstaub beladene Trägerluft von der Dosierscheibe (16) abführenden Rohrleitung (19), deren Mündungen koaxial zueinander und dicht ober- bzw. unterhalb der Dosierscheibe (16) sowie koaxial zu dessen Zellen (24) beim Passieren der Leitungsmündungen liegen, besteht und dass die Dosier- und Austragseinrichtung (16, 17, 18, 19) ausschliesslich an dem abnehmbaren Deckel (21) des Dosierbehälters (11) befestigt ist.

2. Kohlenstaubtank nach Anspruch 1, dadurch gekennzeichnet, dass die Mündungen der Luftleitungen (18, 19) ober- und unterhalb der Dosierscheibe (16) mit sie umgebenden Dichtungen (22, 23) versehen sind.

3. Kohlenstaubtank nach Anspruch 1 oder 2, dadurch gekennzeichnet, dass die Zellen (24) in der Dosierscheibe (16) aus in Bewegungsrichtung rückwärts gekrümmten Kanälen bestehen und dass die Mündungen der Luftleitungen koaxial zu den äusseren Enden dieser Kanäle angeordnet sind.

4. Kohlenstaubtank nach Anspruch 1, 2 oder 3, dadurch gekennzeichnet, dass ober- und unterhalb der Dosierscheibe (16) in der Nähe der Luftleitungsmündungen Leckluftleitbleche (25) angeordnet sind.

5. Kohlenstaubtank nach einem oder mehreren der Ansprüche 1 bis 4, dadurch gekennzeichnet, dass der luftdurchlässige Boden (4) im Tank (1) eine Grösse von etwa 0,2 bis 0,6, vorzugsweise von etwa 0,4 m²/1000 kg Kohlenstaub/Stunde bei maximaler Förderleistung besitzt.

6. Kohlenstaubtank nach einem oder mehreren der Ansprüche 1 bis 5, dadurch gekennzeichnet, dass die den luftdurchlässigen Boden (4) im Tank (1) durchströmende Druckluftmenge etwa 15 bis 60, vorzugsweise 30 m³/h pro m² Bodenfläche und die mittlere Dichte des fluidisierten Kohlenstaubs ($K_1$) etwa 200 bis 250 kg/m³ betragen.

7. Kohlenstaubtank nach einem oder mehreren der Ansprüche 1 bis 6, dadurch gekennzeichnet, dass zwei den Kohlenstaub enthaltende Tanks (1) einer Dosier- und Austragseinrichtung (16, 17, 18, 19) zugeordnet sind.

8. Kohlenstaubtank nach einem oder mehreren der Ansprüche 1 bis 7, dadurch gekennzeichnet, dass in jedem Dosierbehälter (11) zwei oder mehr Dosier- und Austragseinrichtungen (16, 17, 18, 19) angeordnet sind.

**Claims**

1. A coal dust tank provided with a device for the metered discharge particularly of small coal dust quantities into a steady stream, comprising the following features:

a) the coal dust tank (1) is associated with a metering container (11) housing the metering and discharge device (16, 17) and both the tank and the container communicate with each other by means of a conduit (10) or opening located in the lowest part of the tank (1);

b) the coal dust tank (1) and metering container (11) are provided with air-permeable floors (4; 12) whereof at least that of the coal dust tank (1) is inclined at an angle of approximately 8 to 15°, preferably 10°, relative to the horizontal and extends up to the coal dust discharge opening of the tank (1);

c) the space below the air-permeable floor (4) in the tank (1) is divided into several chambers by ribs or the like;

d) compressed air conduits open into the spaces below the air-permeable floors in the tank (1) and the metering container (11), whereof the compressed air conduits (5) attached to the chambers below the floor (4) in the tank (1) are connected to an air distributor (6) supplying the compressed air periodically and pulsatingly;

e) the coal dust tank (1) is connected at its highest point with a dome (2), with the inside thereof being separated from the inside of the tank (1) by means of a filter (3) and with a compressed air conduit (8), preferably connected to the air distributor (6) supplying compressed air periodically and if necessary pulsatingly, opening into said tank dome, and with an opening containing a preferably adjustable throttle valve (9) in contact with the atmosphere being located in the wall of the dome;

f) the space above the coal dust column ($K_2$) in the metering container (11) communicates by means of a conduit (20) with the space below the filter (3);

g) two level gauges (13, 14) controlling the planned release of compressed air by the air distributor (6) are located in the metering container (11), characterized in that the metering and discharge device in the lower region of the metering container (11) comprises a metering wheel (16) rotatable around a vertical axis, driven by a motor (17) and provided with cells (24) arranged in a circle, and a conduit (18) supplying the compressed carrier air to the metering wheel (16) and a conduit (19) removing the carrier air laden with coal dust from the metering wheel (16), with the openings of said conduits laying coaxially to each other and immediately above or below the metering wheel (16) and further laying coaxially to the cells (24) of said wheel as they pass by the conduit openings, and that the metering and discharge device (16, 17, 18, 19) is attached solely to the removable cover (21) of the metering container (11).

2. A coal dust tank according to claim 1, characterized in that the openings of the air conduits (18, 19) are provided above and below the metering wheel (16) with seals (22, 23) surrounding said openings.

3. A coal dust tank according to claim 1 or 2, characterized in that the cells (24) in the metering wheel (16) consist of channels bent backwards relative to the direction of movement and that the openings of the air conduits are arranged coaxially to the outer ends of said channels.

4. A coal dust tank according to claim 1, 2 or 3, characterized in that air leakage deflectors (25) are located above and below the metering wheel (16), near the air conduit openings.

5. A coal dust tank according to one or more of claims 1 to 4, characterized in that the air-permeable floor (4) in the tank (1) has a size of approximately 0.2 to 0.6, preferably approximately 0.4 m²/100 kg of coal dust per hour at maximum conveying capacity.

6. A coal dust tank according to one or more of claims 1 to 5, characterized in that the quantity of compressed air flowing through the air-permeable floor (4) in the tank (1) amounts to approximately 15 to 60, preferably 30 m³/h per m² of floor space and the median density of the fluidized coal dust ($K_1$) is approximately 200 to 250 kg/m³.

7. A coal dust tank according to one or more of claims 1 to 6, characterized in that two tanks (1) containing the coal dust are associated with one metering and discharge device (16, 17, 18, 19).

8. A coal dust tank according to one or more of claims 1 to 7, characterized in that two or more metering and discharge devices (16, 17, 18, 19) are located in each metering container (11).

## Revendications

1. Réservoir de poussier de charbon pourvu d'un dispositif d'extraction dosée en particulier de petites quantités de poussier en un courant régulier, comprenant les caractéristiques suivantes:

a) au réservoir de poussier (1) est adjoint un récipient de dosage (11) contenant le dispositif de dosage et d'extraction (16, 17), et les deux communiquent par une conduite (10) ou une ouverture placée dans la partie la plus basse du réservoir (1);

b) dans le reservoir de poussier (1) et dans le récipient de dosage (11) sont placés des fonds perméables à l'air (4; 12), au moins le fond du réservoir (1) étant incliné d'environ 8 à 15°, de préférence d'environ 10°, sur l'horizontale et s'étendant jusqu'à l'orifice de sortie du poussier du réservoir (1);

c) l'espace situé sous le fond perméable à l'air (4) du réservoir (1) est divisé en plusieurs chambres par des entretoises ou des éléments analogues;

d) dans les espaces situés sous les fonds perméables à l'air du réservoir (1) et du récipient de dosage (11) débouchent des conduites d'air comprimé, les conduites d'air comprimé (5) connectées aux chambres situées sous le fond (4) du réservoir (1) étant connectées à un distributeur d'air (6) qui émet l'air comprimé périodiquement et de manière saccadée et pulsée;

e) le réservoir de poussier (1) est joint à son point le plus haut à un dôme (2) dont l'intérieur est séparé de l'intérieur du réservoir (1) par un filtre (3), dans lequel débouche une conduite d'air comprimé (8) de préférence connectée au distributeur d'air (6) qui émet de l'air comprimé périodiquement et éventuellement de manière saccadée et pulsée, et dans la paroi duquel se trouve une ouverture communiquant avec l'atmosphère et contenant un étranglement (9) de préférence réglable;

f) l'espace situé au-dessus de la colonne de poussier ($K_2$) dans le récipient de dosage (11) est relié par une conduite (20) à l'espace situé au-dessous du filtre (3);

g) dans le récipient le dosage (11) se trouvent deux sondes de niveau (13, 14) qui commandent l'émission programmée d'air comprimé par le distributeur d'air (6), caractérisé par le fait que le dispositif de dosage et d'extraction prévu dans la partie inférieure du récipient de dosage (11) est constitué d'un disque doseur (16) pouvant tourner autour d'un axe vertical, entraîné de façon commandée par un moteur (17) et pourvu de cellules (24) disposées en cercle, et d'une conduite (18) amenant l'air comprimé porteur au disque doseur (16) et d'une conduite (19) évacuant du disque doseur (16) l'air porteur chargé de poussier, les orifices de ces deux conduites étant coaxiaux et placés tout près du disque doseur (16) respectivement juste au-dessus et au-dessous de lui, et de plus coaxiaux avec les cellules (24) du disque doseur quand celles-ci passent devant eux, et que le dispositif de dosage et d'extraction (16, 17, 18, 19) est fixé uniquement au couvercle amovible (21) du récipient de dosage (11).

2. Réservoir de poussier selon la revendication, caractérisé par le fait que les orifices des conduites d'air (18, 19) sont entourés, au-dessus et au-dessous du disque doseur (16), d'éléments d'étanchéité (22, 23).

3. Réservoir de poussier selon l'une des revendications 1 et 2, caractérisé par le fait que les cellules (24) du disque doseur (16) sont constituées de canaux courbés vers l'arrière dans le sens de déplacement, et que les orifices des conduites d'air et les extrémités extérieures de ces canaux sont coaxiaux.

4. Réservoir de poussier selon l'une des revendications 1, 2 et 3, caractérisé par le fait que des déflecteurs d'air de fuite (25) sont placés au-dessus et au-dessous du disque doseur (16) à proximité des orifices des conduites d'air.

5. Réservoir de poussier selon une ou plusieurs des revendications 1 à 4, caractérisé par le fait que le fond perméable à l'air (4) du réservoir (1) a une surface d'environ 0,2 à 0,6 m², de préférence d'environ 0,4 m², par 1000 kg de poussier par heure au débit maximal.

6. Réservoir de poussier selon une ou plusieurs des revendications 1 à 5, caractérisé par le fait que le débit d'air comprimé traversant le fond perméable à l'air (4) du réservoir (1) est d'environ 15 à 60 m³/h, de préférence de 30 m³/h, par mètre carré de surface du fond, et que la masse volumique moyenne du poussier fluidifié ($K_1$) est d'environ 200 à 250 kg/m³.

7. Réservoir de poussier selon une ou plusieurs des revendications 1 à 6, caractérisé par le fait que deux réservoirs (1) contenant le poussier sont adjoints à un dispositif de dosage et d'extraction (16, 17, 18, 19).

8. Réservoir de poussier selon une ou plusieurs des revendications 1 à 7, caractérisé par le fait que dans chaque récipient de dosage (11) sont placés plusieurs dispositifs de dosage et d'extraction (16, 17, 18, 19).

Fig.1

Fig.2